Europäisches Patentamt

**European Patent Office**

**Office européen des brevets**

(11) Veröffentlichungsnummer: **0 108 870**
**B1**

(12) EUROPÄISCHE PATENTSCHRIFT

(45) Veröffentlichungstag der Patentschrift:
24.06.87

(51) Int. Cl.⁴: **B 60 R 19/48,** B 60 D 1/06

(21) Anmeldenummer: **83108111.2**

(22) Anmeldetag: **17.08.83**

(54) Stossfänger-Tragkörper aus faserverstärktem Werkstoff für Automobile oder dergleichen.

(30) Priorität: **12.10.82 DE 3237762**

(43) Veröffentlichungstag der Anmeldung:
**23.05.84 Patentblatt 84/21**

(45) Bekanntmachung des Hinweises auf die Patenterteilung:
**24.06.87 Patentblatt 87/26**

(84) Benannte Vertragsstaaten:
**FR GB IT**

(56) Entgegenhaltungen:
**FR - A - 2 165 038**
**FR - A - 2 221 930**
**FR - A - 2 256 656**
**FR - A - 2 258 987**
**FR - A - 2 369 127**
**US - A - 3 863 956**
**US - A - 4 076 296**

(73) Patentinhaber: **Messerschmitt-Bölkow-Blohm Gesellschaft mit beschränkter Haftung,
Robert-Koch-Strasse, D-8012 Ottobrunn (DE)**

(72) Erfinder: **Prochaska, Wolfgang, Dipl.-Ing.,
Effnerstrasse 91, D-8000 München 81 (DE)**
Erfinder: **Schulz, Ralf Thilo, Dipl.-Ing.,
Ödenstockacherstrasse 3, D-8011 Putzbrunn (DE)**

## Beschreibung

Die Erfindung bezieht sich auf einen Stossfänger-Tragkörper aus faserverstärktem Werkstoff für Automobile oder dergleichen, der in Wickeltechnik hergestellt ist.

Ein solcher Stossfänger-Tragkörper, der gemäss dem Gattungsbegriff des Anspruchs 1 angedeutet ist, ist aus der FR-A 2 165 038 bekannt. Hier wird zunächst ein ovaler Ring mit geschlossenem etwa rechteckigen Querschnitt gewickelt, der anschliessend an den Schmalseiten des Ovals auseinandergeschnitten wird. Auf diese Weise entstehen zwei bogenförmige Stossfänger-Tragkörper, die mit Hilfe von ebenfalls gewickelten ringförmigen Befestigungselementen mit der Karosserie verbunden werden können.

Aus der FR-A 2 258 987 ist ein aus harzgetränkten Fasermatten zusammengesetzter Stossfänger-Tragkörper bekannt, der ebenfalls einen geschlossenen, kastenförmigen Querschnitt aufweist. Dieser Stossfänger-Tragkörper ist jedoch nicht in Wickeltechnik hergestellt.

Ferner ist aus der US-A 4 076 296 ein Stossfänger-Tragkörper bekannt, der gegebenenfalls aus faserverstärkten Werkstoffen, z.B. glasfaserverstärktem Werkstoff durch Formpressen oder Extrudieren hergestellt ist. Dieser Stössfänger ist aus mehreren Tragkörpern zusammengesetzt.

Der Erfindung liegt die Aufgabe zugrunde, einen Stossfänger-Tragkörper der in Rede stehenden Art anzugeben, mit dem ohne Schwierigkeiten ein Befestigungselement für eine Anhängerkupplung oder eine Abschleppöse verbunden werden kann.

Diese Aufgabe ist gemäss der Erfindung durch die im kennzeichnenden Teil des Patentanspruches 1 angegebenen Merkmale gelöst.

Demgemäss wird ein Stossfänger-Tragkörper nach der Erfindung aus harzgetränkten Faatersträngen bzw. Faserbändern mit einem kastenförmigen Profil gewickelt. Das Wickelverfahren kann vollständig automatisiert werden. Durch eine gesteuerte Ablage der Faserstränge bzw. Faserbänder können die Festigkeitseigenschaften des Stossfänger-Tragkörpers optimal bestimmt werden. Der Wickelkörper kann z.B. an den horizontalen Kastenwänden eine Stoss- und Zugkräfte in etwa horizontaler Richtung aufnehmende Bewicklung und zumindest an der dem Automobil abgewandten etwa senkrechten Wand eine Bewicklung mit kleinem Wicklungswinkel gegen die horizontale Längsrichtung des Stossfänger-Tragkörpers aufweisen. Durch eine derartige Bewicklung können mit den horizontalen Kastenwänden auch Eirichtungen zur Befestigung einer Schlepplast, z.B. eine Anhängerkupplung oder eine Abschleppöse, oder ein Stossdämpfer verbunden werden. Auf diese Weise ergibt sich eine integrierte Einheit des Stossfänger-Tragkörpers und der jeweiligen Befestigungseinrichtung. Die Einrichtung zur Befestigung der Schlepplast ist mit einer Befestigungsplatte zwischen den beiden kastenförmigen Wickelkörpern verbunden, wobei bevorzugt die beiden Wickelkörper jeweils mittig eine Aussparung aufweisen, in der die Einrichtung zur Befestigung der Schlepplast gelegen ist.

Die Erfindung wird nachfolgend anhand der Zeichungen näher erläutet, wobei sich die Darstellungen auf beispielsweise Ausführungsformen der Erfindung beziehen.

Fig. 1 ein Ausführungsbeispiel eines Stossfänger-Tragkörpers gemäss der Erfindung mit integrierter Anhängerkupplung;

Fig. 2 einen Querschnitt durch einen weiteren Stossfänger-Tragkörper gemäss der Erfindung mit einer integrierten Abschleppöse;

Fig. 3 eine Teilaufsicht auf den Stossfänger-Tragkörper gemäss Figur 2;

Fig. 4 schematische Aufsichten auf Stossfänger-Tragkörper unterschiedlicher Form.

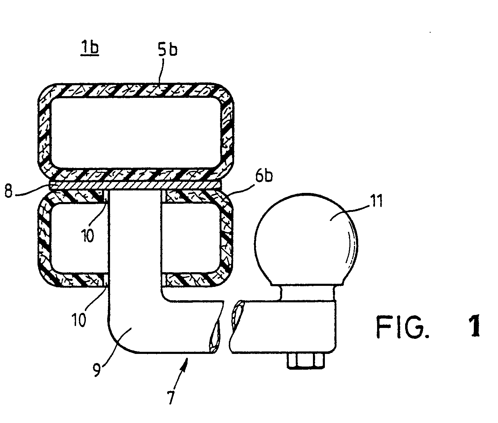

In Figur 1 ist ein Stossfänger-Tragkörper 1b wiederum aus zwei rechteckigen Wickelkörpern dargestellt, mit dem eine Anhängerkupplung 7 konstruktiv verbunden ist. Die Anhängerkupplung 7 weist eine Befestigungsplatte 8 z.B. aus Stahl auf, die zwischen den langen Rechteckseiten der beiden Wickelkörper 5b und 6b gelegen und mit diesen fest verbunden ist. An der Befestigungsplatte 8 ist ein L-förmiges Rohr 9 angeschweisst, dass sich durch zwei Öffnungen 10 des unteren Wickelkörpers 6b erstreckt und am Ende des horizontalen Schenkels eine Kupplungskugel 11 trägt.

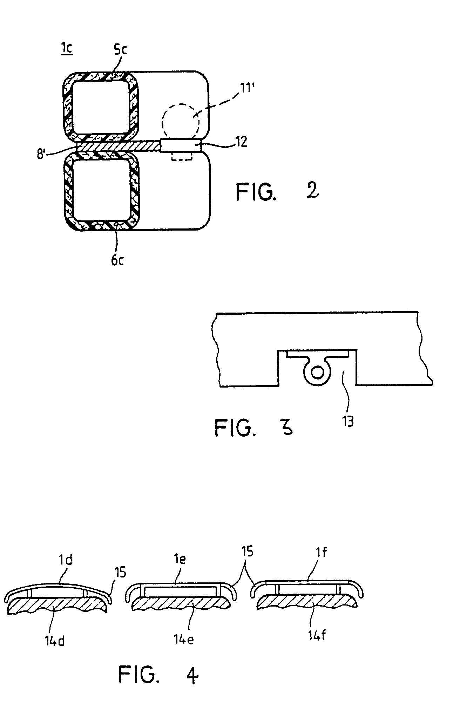

Gemäss den Figuren 2 und 3 ist ein Stossfänger-Tragkörper 1c mit einer integrierten Abschleppöse 12 dargestellt. Der Stossfänger-Tragkörper 1c ist aus Wickelkörpern 5c und 6c mit Rechteckprofil wie in Figur 1 zusammengesetzt. Im Bereich, wo die Abschleppöse 12 mit dem Stossfänger-Tragkörper befestigt ist, sind die beiden Wickelkörper 5c und 6c eingeschnürt, so dass der Stossfänger-Tragkörper hier eine Aussparung 13 aufweist. Die Abschleppöse 12 liegt innerhalb dieser Aussparung und ragt nicht über die Aussenkontur des Stossfänger-Tragkörpers hinaus. Hierdurch werden bei Auffahrunfällen Beschädigungen eines auffahrenden Fahrzeuges durch die Abschleppöse vermieden.

Die Abschleppöse 12 selbst ist an einer Befestigungsplatte 8' befestigt, die zwischen den beiden Wickelkörpern 5c und 6c gelegen und mit diesen verbunden ist. Befestigungsplatte 8' und Abschleppöse 12 sind z.B. aus Stahl, können jedoch in diesem Fall auch aus faserverstärktem Werkstoff hergestellt sein. Wie in Figur 2 gestrichelt dargestellt, ist es z.B. möglich, mit der Befestigungsplatte 8' im Bereich der Abschleppöse 12 eine Kupplungskugel 11' vorzusehen, so dass hier eine integrierte Anhängerkupplung entsteht.

In Figur 4 sind schematisch Aufsichten auf verschiedene Stossfänger-Tragkörper 1d, 1e, 1f dargestellt, die mit einem Automobil 14d, e, f verbunden sind. Fortgelassen sind hier selbstverständlich die ansonsten noch vorhandenen Umkleidungen. Aus diesen Darstellungen geht hervor, dass nicht nur geradlinige Stossfänger-Tragkörper gewickelt werden können, wie z.B. der Tragkörper 1e, sondern auch leicht gebogene Stossfänger-Tragkörper, wie der Tragkörper 1d. An den Seiten der Stossfänger-Tragkörper können Einsatzstüke 15 mit der gewünschten Aussenkontur des Stossfänger-Tragkörpers mit diesem verbunden werden.

Stossstangen aus faserverstärktem Werkstoff mit Kastenprofil sind in sich stabil und können stark belastet werden, ohne dass Verformung auftritt. Bei Auffahrunfällen zeigen sie auch unter hohen Belastungen gute Feder- und Dämpfungscharakteristiken, ohne dass sie plastisch verformt werden.

## Patentansprüche

1. Stossfänger-Tragkörper für Automobile oder dergleichen, der an tragenden Rahmenteilen des Automobiles befestigt ist und einen geschlossenen kastenförmigen, im Querschnitt rechteckigen Wickelkörper (5b, 6b; 5c, 6c) aus faserverstärktem Werkstoff aufweist, dadurch gekennzeichnet, dass der Stossfänger-Tragkörper (1b, 1c) aus zwei Wickelkörpern (5b, 6b; 5c, 6c) zusammengesetzt ist und dass zwischen den Wickelkörpern (5b, 6b; 5c, 6c) eine Befestigungsplatte (8, 8') für eine Einrichtung (7, 12) zur Befestigung einer Schlepplast vorgesehen ist.

2. Stossfänger-Tragkörper nach Anspruch 1, dadurch gekennzeichnet, dass mit der Befestigungsplatte (8) eine Anhängerkupplung (7) aus einem L-förmigen Rohr (9) und einer mit einem Ende dieses Rohrs (9) verbundenen Kupplungskugel (11) verbunden ist, und dass das andere freie Ende des Rohres den einen Wickelkörper (6d) durchstösst und mit der Befestigungsplatte (8) verbunden ist.

3. Stossfänger-Tragkörper nach Anspruch 1, dadurch gekennzeichnet, dass die beiden Wickelkörper (5c, 6c) jeweils mittig eine Aussparung (13) aufweisen, in der die Einrichtung zur Befestigung einer Schlepplast (11', 12) gelegen ist.

4. Stossfänger-Tragkörper nach einem der vorhergehenden Ansprüche, dadurch gekennzeichnet, dass jeder kastenförmige Wickelkörper (5b, 6b; 5c, 6c) an den horizontalen Kastenwänden eine Stoss- und Zugkräfte in etwa horizontaler Richtung aufnehmende Bewicklung aufweist.

5. Stossfänger-Tragkörper nach Anspruch 4, dadurch gekennzeichnet, dass jeder kastenförmige Wickelkörper (5b, 6b; 5c, 6c) an den etwa senkrechten Kastenwänden eine Bewicklung mit kleinem Wicklungswinkel gegen die horizontale Längsrichtung des Stossfänger-Tragkörpers (1b, 1c) aufweist.

## Claims

1. A bumper supporting body for automobiles or the like, which is fastened to supporting frame parts of the automobile and has a closed box-shaped wound body (5b, 6b; 5c, 6c) which is rectangular in cross-section and made of fibre-reinforced material, characterised in that the bumper supporting body (1b, 1c) is composed of two wound bodies (5b, 6b; 5c, 6c) and in that provided between the wound bodies (5b, 6b; 5c, 6c) is a fastening plate (8, 8') for a mechanism (7, 12) for the fastening of a towed load.

2. A bumper supporting body according to claim 1, characterised in that connected to the fastening plate (8) is a trailer coupling (7) consisting of an L-shaped tube (9), and a coupling ball (11) connected to one end of this tube (9), and in that the other free end of the tube pierces the one wound body (6d) and is connected to the fastening plate (8).

3. A bumper supporting body according to claim 1, characterised in that the two wound bodies (5c, 6c) in each case have centrally a recess (13) in which the mechanism for the fastening of a towed load (11', 12) is situated.

4. A bumper supporting body according to one of the preceding claims, characterised in that each box-shaped wound body (5b, 6b; 5c, 6c) has on the horizontal box walls a winding which absorbs impact and tensile forces in approximately the horizontal direction.

5. A bumper supporting body according to claim 4, characterised in that each box-shaped wound body (5b, 6b; 5c, 6c) has on the approximately perpendicular box walls a winding having a small winding angle towards the horizontal longitudinal direction of the bumper supporting body (1b, 1c).

## Revendications

1. Support de pare-chocs pour automobiles ou analogues qui est fixé sur des parties portantes du châssis de l'automobile et qui comprend un corps bobiné (5b, 6b; 5c, 6c) de section transversale rectangulaire en forme de caisson fermé réalisé en matériau renforcé de fibres, caractérisé par le fait que le support de pare-chocs (1b, 1c) se compose de deux corps bobinés (5b, 6b; 5c, 6c) et qu'entre les corps bobinés (5b, 6b; 5c, 6c) est insérée une plaque d'ancrage (8, 8') destinée à recevoir un dispositif (7, 12) pour la fixation d'une charge remorquée.

2. Support de pare-chocs selon la revendication 1, caractérisé par le fait que sur la plaque d'ancrage (8) est assujetti un dispositif d'attelage de remorque (7) constitué par un tube (9) en forme de (L) et par une boule d'accouplement (11) raccordée à une extrémité de ce tube (9) et que l'autre extrémité libre du tube traverse l'un des corps bobinés (6b) et est raccordée à la plaque d'ancrage (8).

3. Support de pare-chocs selon la revendication (1), caractérisé par le fait que les deux corps bobinés (5c, 6c) comportent respectivement en leur milieu un évidement (13) dans lequel est logé le dispositif pour la fixation d'une charge remorquée (11', 12).

4. Support de pare-chocs selon l'une des revendications précédentes, caractérisé par le fait que chaque corps bobiné (5b, 6b; 5c, 6c) en forme de caisson comporte, au niveau des parois horizontales du caisson, un enroulement absorbant les efforts de tamponnement et les efforts de traction dans le sens sensiblement horizontal.

5. Support de pare-chocs selon la revendication 4, caractérisé par le fait que chaque corps bobiné (5b, 6b; 5c, 6c) en forme de caisson comporte, au niveau des parois sensiblement verticales du caisson, un enroulement ayant un petit angle d'enroulement par rapport au sens longitudinal horizontal du support de pare-chocs (1b, 1c).

FIG. 1

FIG. 2

FIG. 3

FIG. 4